# EUROPEAN PATENT SPECIFICATION

(11) **EP 2 248 835 B1**
(45) Date of publication and mention of the grant of the patent: **14.10.2015**
(21) Application number: 09714345.7
(22) Date of filing: 19.02.2009
(51) Int. Cl.: C08F 290/04, C09J 4/00, C09J 125/00, C09J 127/12, C09J 133/00, C09J 133/20, C09J 143/02, C09J 143/04, C09J 201/02, C09K 3/10, C08F 220/16, C08F 230/02

(54) **CURABLE COMPOSITION**
HÄRTBARE ZUSAMMENSETZUNG
COMPOSITION DURCISSABLE

(30) Priority: 29.02.2008 JP 2008050659
(43) Date of publication of application: 10.11.2010
(73) Proprietor: KANEKA CORPORATION, Osaka (JP)
(72) Inventor: TAMAI, Hitoshi, Settsu-shi Osaka 566-0072 (JP); NAKAGAWA, Yoshiki, Takasago-shi Hyogo 676-8688 (JP)
(74) Representative: Hart-Davis, Jason
(86) International application number: PCT/JP2009/052869
(87) International publication number: WO 2009/107537

(56) References cited:
- JP-A- 10 287 718
- JP-A- 2000 044 810
- JP-A- 2003 096 143
- JP-A- 2006 169 412
- JP-A- 2007 016 145
- JP-A- 2008 133 326
- US-A1- 2006 264 573

## Description

### TECHNICAL FIELD

The present invention relates to a curable composition that is curable by heating or active energy at ordinary temperature, and a cured product produced by use of the composition. More specifically, the present invention relates to a composition containing, as an essential component, a vinyl polymer having, in a molecular terminal thereof, a (meth) acryloyl type group, and a cured product produced by use of the composition.

### BACKGROUND ART

Hitherto, as a sealant, a material has been used which is made mainly of a silicone material, an acrylic resin, or an acrylate resin, a typical example of which is a urethane (meth)acrylate resin.

In recent years, in some cases a sealing member has been used around regions where use is made of an SJ grade engine oil, which is a high-performance engine oil, a transmission oil for an automatic transmission car, and a part of a gear oil. For the sealing member usable in the regions, oil resistance and heat resistance have been required.

However, when a silicone material is used for such a sealing member, for which oil resistance is required, the sealing member tends to be largely damaged by the oil. Thus, disclosed are a method of incorporating, thereinto, basic zinc carbonate containing 5 to 50% by weight of iminoxysilane and zinc hydroxide (for example, Patent Document 2), and other inventions. However, in the present circumstances, it has been difficult to realize required properties into a desired level.

By contrast, an acrylic resin, which is excellent in oil resistance and heat resistance, has been hitherto used for various articles or purposes, for example, not only a seal for building, an adhesive agent, and a tackifier but also functional components and security components chiefly around an engine of a car.

However, an acrylic rubber, which is obtained by crossing compounding agents, such as a filler and a vulcanizer, with an unvulcanized rubber and then vulcanizing/shaping them, adheres onto a roll at the time of the kneading, or is not easily made flat and smooth when the rubber is made into a sheet; or at the time of the shaping, the rubber is non-flowable, and causes other inconveniences, so that there remain problems of poorness in workability and smallness in vulcanization speed. Alternately, post-curing over a long period is necessary therefor, and other inconveniences are caused, so that there remains a problem of poorness in curability. There also remain a problem about reliability in sealing performance, a problem that a flange plane thereof needs to be precisely worked, and other problems.

Thus, acrylic resins having an improved workability or curability have also been developed (for example, Patent Document 1). However, the resins do not have photocurability, which can realize a large curability and an improved productivity.

As an acrylate resin that can be cured at a large speed, a resin made mainly of a urethane (meth)acrylate resin is developed so as to have an excellent oil resistance (for example, Patent Document 3). However, the resin has a problem about heat resistance over a long term since the resin has, in the main chain thereof, an ether bond or an ester bond.

As an acrylate resin which has excellent heat resistance and oil resistance and is curable at a large speed, the present inventors developed a vinyl polymer having a main chain obtained by living radical polymerization and a terminal which has a (meth)acryloyl group (for example, Patent Documents 4 and 5).
Patent Document 1: JP-A-2000-154370
Patent Document 2: JP-A-3-203960
Patent Document 3: JP-A-64-112
Patent Document 4: JP-A-2000-72816
Patent Document 5: JP-A-2000-95826

JP-A-2007-016145 and JP-A-2008-133326 show curable compositions according to the preamble of claim 1.

A room temperature-curable sealant composition of US 2006/0264573 A1 comprises a radical-polymerizable component, an oxidizing agent and reducing agent, wherein the radical-polymerizable component comprises 25 to 45 weight percent of at least one of an alkacrylate monomer and an unsaturated phosphorous monomer, and 55 to 75 weight percent of an ethylenic unsaturated liquid elastomer polymer, wherein said alkacrylate monomer comprises an α, β-unsaturated C₁-C₂₀ ester of alkyl(C₁-C₄)-substituted acrylic acid.

According to JP-A-2003-096143, a curing resin composition contains a crosslinking (meth)acrylic polymer having a radical-polymerizable double bond ad a radical-polymerizable monomer containing as an essential component a phosphoric ester monomer having a (meth)acryloyl group.

### DISCLOSURE OF THE INVENTION

### PROBLEMS TO BE SOLVED BY THE INVENTION

An object of the present invention is to provide an active-energy-curable composition having an appropriate adhesive property onto a substrate and an excellent curability, and a cured product thereof.

### MEANS FOR SOLVING THE PROBLEMS

The present inventors have made eager investigations on a vinyl polymer having, at a terminal thereof, a (meth) acryloyl group, so as to notice that although a vinyl polymer having, at a terminal thereof, a (meth)acryloyl group is excellent in heat resistance and oil resistance, the polymer is insufficient in adhesive property onto a substrate in accordance with a use manner thereof. Thus, the inventors have made an attempt for improving the adhesive property by use of a coupling agent, a polymerizable monomer having a carboxylate group, or a compound having a functional group, a typical example of which is a polar group, the agent, monomer or compound being expected to produce an adhesive property improving effect in light of descriptions of documents, books and maker catalogues and is known as an ordinary adhesion-imparting agent. However, a remarkable effect on the adhesive property onto a substrate has not been found out. The use of a vinyl monomer having a phosphate group makes an improvement on the substrate adhesive property, and the use thereof together with a vinyl monomer having a cyclic structure is also effective.

The present invention is defined in the claims.

When the curable composition of the present invention further comprises (c) a vinyl monomer having a cyclic structure, the adhesive property onto a substrate can be made higher.

The vinyl monomer (c) having a cyclic structure may be a (meth)acrylic acid monomer from the viewpoint of the reactivity thereof.

The curable composition of the present invention contains the vinyl monomer (b) having a phosphate group preferably in an amount of 0.1 parts by weight or more and 100 parts by weight or less for 100 parts by weight of the whole of the vinyl polymer (a).

The ratio of the weight-average molecular weight (Mw) of the vinyl monomer (a) to the number-average molecular weight (Mn) thereof, Mw/Mn, is preferably less than 1.8.

The main chain of the vinyl polymer (a) is produced preferably by living radical polymerization, more preferably by atom transfer radical polymerization. In the atom transfer radical polymerization, it is preferred that a complex of copper be used as a catalyst. The main chain of the vinyl polymer (a) is produced preferably by polymerizing a vinyl monomer, using a chain transfer agent.

The main chain of the vinyl polymer (a) is a main chain produced by polymerizing a (meth)acrylic ester, even more preferably by polymerizing mainly an acrylic ester.

The number-average molecular weight of the vinyl polymer (a) is preferably 3000 or more, more preferably 5000 or more, even more preferably 8000 or more. The vinyl polymer (a) is preferably a compound produced by substituting a terminal halogen group of a vinyl polymer represented by the following general formula (2):

-CR¹R²X (2)

wherein R¹ and R² are each a group bonded to an ethylenically unsaturated group of a vinyl monomer, and X represents chlorine, bromine or iodine, with a compound represented by the following general formula (3):

M⁺⁻OC(O)C(R)=CH₂ (3)

wherein R represents hydrogen or an organic group having 1 to 20 carbon atoms, and M⁺ represents an alkali metal or a quaternary ammonium ion; and/or a compound produced by causing a vinyl polymer having a hydroxyl group at a terminal thereof to react with a compound represented by the following general formula (4):

XC(O)C(R)=CH₂ (4)

wherein R represents hydrogen or an organic group having 1 to 20 carbon atoms, and X represents chlorine, bromine or iodine.

The vinyl polymer (a) may be a compound produced by causing a vinyl polymer having a hydroxyl group at a terminal thereof to react with a diisocyanate compound, and then causing remaining fractions of the isocyanate groups to react with a compound represented by the following formula (5):

HO-R'-OC(O)C(R)=CH₂ (5)

wherein R represents hydrogen or an organic group having 1 to 20 carbon atoms, and R' represents a bivalent organic group having 2 to 20 carbon atoms.

The curable composition of the present invention further comprises (d) an initiator. The initiator (d) may be at least one selected from the group consisting of a thermopolymerization initiator, a photopolymerization initiator, and a redox initiator.

The cured product of the present invention is obtained by curing the curable composition.

The cured product can be obtained by curing the composition by heating and/or an active energy beam. The active energy beam may be UV rays and/or an electron beam.

The curable composition of the present invention is suitable for a sealant, an electrical/electronic component material, an electrically insulating member, an adhesive agent, a tackifier, a potting agent, a heat radiating member, a vibration proof/vibrating controlling/vibration-free member, a film, or a casting material.

### EFFECTS OF THE INVENTION

The curable composition of the present invention makes it possible to yield a cured product which exhibits an excellent adhesive property onto an adherend surface of a substrate as well as excellent heat resistance, weather resistance, oil resistance, compression permanent strain and mechanical properties, which a cured product yielded from a vinyl polymer (a) originally has.

### BEST MODE FOR CARRYING OUT THE INVENTION

The individual components contained in the curable composition of the present invention will be described in detail hereinafter.

### <<Vinyl polymer (a)>>

### <Main chain>

The vinyl polymer (a) in the present invention is a vinyl polymer having, in any single molecule thereof, at least one group represented by the following general formula (1) ((meth)acryloyl group) at a molecular terminal thereof:

-OC(O)C(R)=CH₂ (1)

wherein R represents hydrogen or an organic group having 1 to 20 carbon atoms.

The number of the (meth)acryloyl group(s) in the vinyl polymer (a) is preferably two or more, more preferably from 2 to 3, even more preferably 2 per molecule in order to crosslink the polymer.

The vinyl polymer (a) is a polymer having, in any single molecule thereof, at least one (meth)acryloyl group at a molecular terminal of the vinyl polymer. When the polymer has two or more (meth)acryloyl groups, the polymer preferably has the groups at both terminals thereof in order to make the inter-crosslinked point molecular weight large to yield rubbery elasticity.

In the general formula (1), R is a hydrogen atom or an organic group having 1 to 20 carbon atoms, and is preferably a hydrogen atom or a hydrocarbon group having 1 to 20 carbon atoms.

Examples of the organic group having 1 to 20 carbon atoms include alkyl groups having 1 to 20 carbon atoms, aryl groups having 6 to 20 carbon atoms, aralkyl groups having 7 to 20 carbon atoms, and a nitrile group. These may each have a substituent such as a hydroxyl group.

Examples of the alkyl groups having 1 to 20 carbon atoms include a methyl group, an ethyl group, a propyl group, a butyl group, a pentyl group, a hexyl group, an octyl group, a decyl group and the like. Examples of the aryl group having 6 to 20 carbon atoms include a phenyl group, a naphthyl group and the like. Examples of the aralkyl groups having 7 to 20 carbon atoms include a benzyl group, a phenylethyl group and the like.

Specific examples of R include -H, -CH₃, -CH₂CH₃, -(CH₂)ₙCH₃ wherein n represents an integer of 2 to 19, -C₆H₅-, -CH₂OH, -CN and the like. R is preferably -H or -CH₃.

Monomers described in paragraph [0018] of JP-A-2005-232419 include (meth) acrylic acid monomers, aromatic vinyl monomers, fluorine-containing vinyl monomers, silicon-containing vinyl monomers, maleimide monomers, nitrile-group-containing vinyl monomers, amide-group-containing vinyl monomers, vinyl esters, alkenes, conjugated dienes, vinyl chloride, vinylidene chloride, allyl chloride, allyl alcohol and the like. These may be used alone, or two or more thereof may be copolymerized with each other. Herein, (meth)acrylic acid denotes acrylic acid and/or methacrylic acid.

For polymerizing mainly at least one selected from the group consisting of a (meth) acrylic monomer, an acrylonitrile monomer, an aromatic vinyl monomer, a fluorine-containing vinyl monomer, and a silicon-containing vinyl monomer, the word "mainly" means that the amount of the monomer (s) is 50% or more by mole of monomer units constituting the vinyl polymer (a), preferably 70% or more by mole thereof.

Of these monomers, an acrylic ester monomer and/or a methacrylic ester monomer is/are used for the composition of claim 1. The acrylic ester monomer is in particular preferably an alkyl acrylate monomer. Specific examples thereof include ethyl acrylate, 2-methoxyethyl acrylate, stearyl acrylate, butyl acrylate, 2-ethylhexyl acrylate, 2-methoxybutyl acrylate and the like.

In the present invention, these preferred monomers may each be copolymerized with a different monomer, and may each be block-copolymerized therewith. At this time, one or more of these preferred monomers are contained preferably in an amount of 40% or more by weight.

The molecular weight distribution of the vinyl polymer (a) in the present invention, that is, the ratio of the weight-average molecular weight (Mw) thereof to the number-average molecular weight (Mn) thereof, Mw/Mn, is not particularly limited, the molecular weights being measured by gel permeation chromatography (GPC). The ratio is preferably less than 1.8, more preferably 1.7 or less, even more preferably 1.6 or less, even more preferably 1.5 or less, in particular preferably 1.4 or less, most preferably 1.3 or less. If the molecular weight distribution is too large, the viscosity at the same inter-crosslinked-point molecular weight increases, so that the polymer tends not to be easily handled. In the GPC measurement in the present invention, chloroform is used as a mobile phase therefor. The measurement is made in a polystyrene gel column, and the number-average molecular weight and the like can be obtained in terms of polystyrene.

The number-average molecular weight of the vinyl polymer (a) in the present invention is not particularly limited. When the molecular weight is measured by GPC, the molecular weight ranges preferably from 500 to 1,000,000, more preferably from 3,000 to 100,000, even more preferably from 5,000 to 80,000, even more preferably from 8,000 to 50,000. If the molecular weight is too low, original properties of the vinyl polymer (a) tend not to be easily expressed. By contrast, if the molecular weight is too high, the polymer tends not to be easily handled.

### <Method for synthesizing the vinyl polymer (a)>

The vinyl polymer (a) used in the present invention can be obtained by various polymerization methods. The method to be used is not particularly limited, and is preferably a radical polymerization method from the viewpoint of multiusability for monomers, easiness of the control of the process, and the like. Of radical polymerization manners, control radical polymerization is more preferred. This control radical polymerization can be classified into the "chain transfer agent method" and the "living radical polymerization method". The living radical polymerization is more preferred, in which the molecular weight and the molecular weight distribution of the resultant vinyl polymer (a) are easily controlled. Atom transfer radical polymerization is particularly preferred since raw materials therefor are easily available and a functional group is easily introduced into a polymer terminal. The radical polymerization, the control radical polymerization, the chain transfer agent method, the living radical polymerization method, and the atom transfer radical polymerization are known polymerization methods. About each of the polymerization methods, for example, descriptions in JP-A-2005-232419, JP-A-2006-291073 and the like can be referred to.

The atom transfer radical polymerization, which is one of the preferred methods for synthesizing the vinyl polymer (a) in the present invention, will be briefly described hereinafter.

In the atom transfer radical polymerization, it is preferred to use, as an initiator, an organic halide, in particular, an organic halide having a carbon-halogen bond which is high in reactivity, (for example, a carbonyl compound having, at an α-position thereof, a halogen, or a compound having, at a benzidine position thereof, a halogen), a sulfonyl halide compound, or some other compound. Specific examples thereof include compounds described in paragraphs [0040] to [0064] of JP-A-2005-232419.

In order to yield a vinyl polymer having, in a single molecule thereof, two or more (meth)acryloyl groups, it is preferred to use, as an initiator, an organic halide or sulfonyl halide compound which has two or more initiation points. Specific examples thereof include: 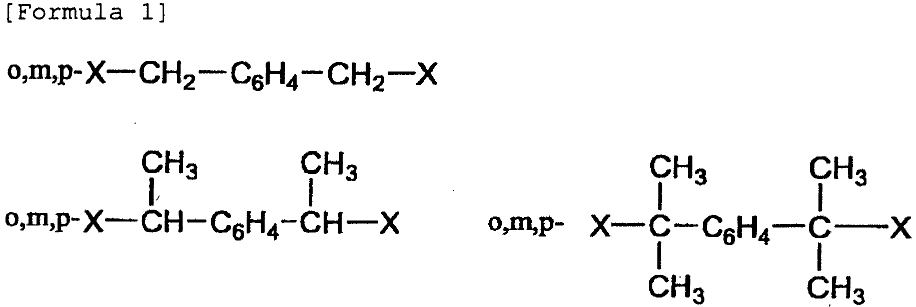 wherein each C₆H₄ is a phenylene group, and each X is chlorine, bromine or iodine, 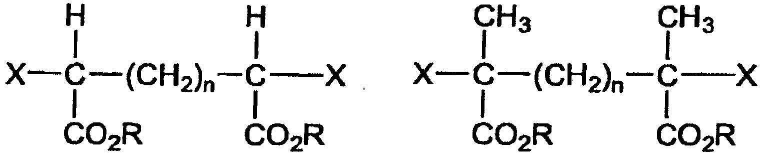 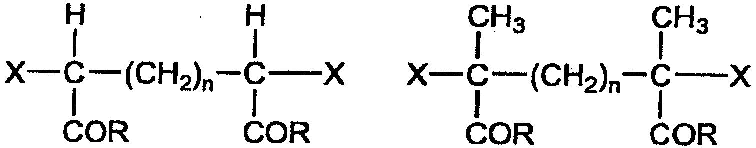 wherein each R is an alkyl group having 1 to 20 carbon atoms, an aryl group, or an aralkyl group, each n is an integer of 0 to 20, and each X is chlorine, bromine or iodine, 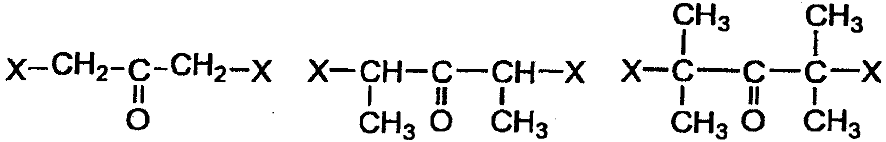 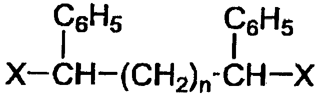 wherein each X is chlorine, bromine or iodine, and n is an integer of 0 to 20, 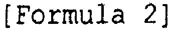 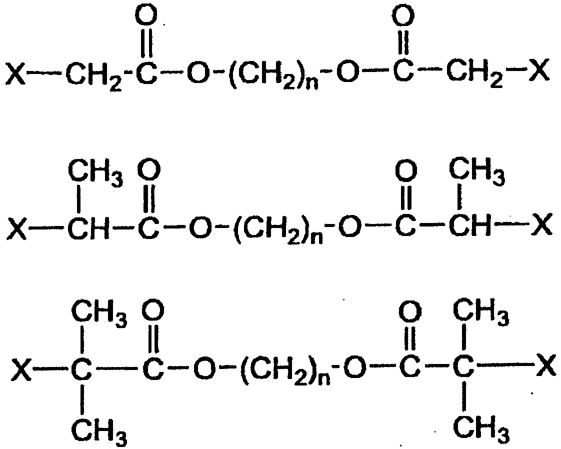 wherein each n is an integer of 0 to 20, and each X is chlorine, bromine or iodine, and

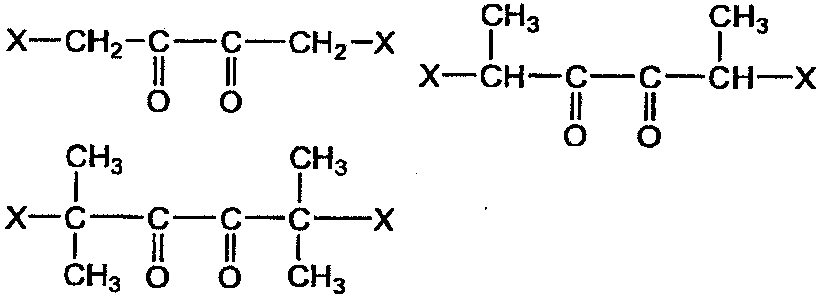

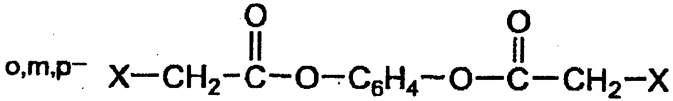

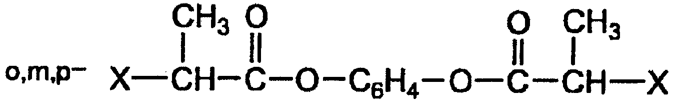

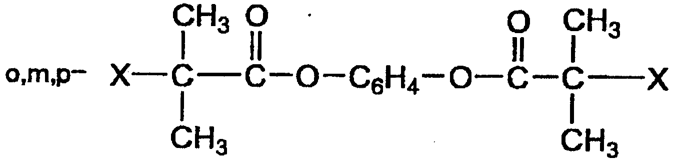

o,m,p- X-SO₂-C₆H₄-SO₂-X

wherein each X is chlorine, bromine or iodine.

The initiator may be some other compound.

The vinyl monomer used in the atom transfer radical polymerization is not particularly limited, and all of the vinyl monomers given as the above-mentioned examples can be preferably used.

A transition metal complex used as a catalyst for the polymerization is not particularly limited, and is preferably a metal complex having, as a central metal thereof, an element in the Group 7, 8, 9, 10 or 11 of the periodic table, more preferably a transition metal complex having, as a central metal thereof, zerovalent copper, monovalent copper, bivalent ruthenium, bivalent iron, or bivalent nickel, in particular preferably a copper complex. Specific examples of monovalent copper used to form the copper complex include cuprous chloride, cuprous bromide, cuprous iodide, cuprous cyanide, cuprous oxide, cuprous perchlorate and the like. When the copper compound is used, a ligand is added thereto in order to make the catalytic activity high, an example of the ligand being 2,2'-bipyridyl or a derivative thereof, 1,10-phenanthroline or a derivative thereof, or a polyamine such as tetramethylethylenediamine, pentamethyldiethylenetriamine, hexamethyltris(2-aminoethyl)amine or the like.

The polymerization reaction may be conducted without using any solvent. The reaction, however, may be conducted in a solvent which may be of various types. The types of the solvent are not particularly limited, and examples of the solvent include solvents described in paragraph [0067] of JP-A-2005-232419. These may be used alone or in combination of two or more thereof. The polymerization may be attained in an emulsion system, or in a system wherein supercritical fluid CO₂ is used as a medium.

The polymerization temperature is not particularly limited, and may range from 0 to 200°C, preferably from room temperature to 150°C.

### <Method for introducing the polymerizable carbon-carbon double bond>

The method for introducing the polymerizable carbon-carbon double bond ((meth)acryloyl group) into the resultant vinyl polymer may be a known method. Examples of the method include methods described in paragraphs [0080] to [0091] of JP-A-2004-203932. Of these methods, preferred is a product produced by substituting a terminal halogen group of a vinyl polymer which is represented by the following general formula (2): -CR¹R²X wherein R¹ and R² are each a group bonded to an ethylenical unsaturated group of a vinyl monomer, and X represents chlorine, bromine or iodine, with a compound represented by the following general formula (3): M⁺⁻OC(O)C(R)=CH₂ wherein R represents hydrogen or an organic group having 1 to 20 carbon atoms, and M⁺ represents an alkali metal or a quaternary ammonium ion since the process is more easily controlled.

The (meth)acrylic polymer having the terminal structure represented by the general formula (2) is produced by a method of polymerizing a vinyl monomer, using the above-mentioned organic halide or sulfonyl halide compound as an initiator, and the transition metal complex as a catalyst, or a method of polymerizing a vinyl monomer, using a halogen compound as a chain transfer agent. The former is preferred.

The compound represented by the general formula (3) is not particularly limited, and specific examples of R include -H, -CH₃, -CH₂CH₃, -(CH₂)ₙCH₃ wherein n represents an integer of 2 to 19, -C₆H₅, -CH₂OH, -CN and the like. Preferred is -H or -CH₃.

M⁺ is a counter cation against the oxy anion. The species of M⁺ is an alkali metal ion, specific examples thereof including a lithium ion, a sodium ion, or a potassium ion; or a quaternary ammonium ion. Examples of the quaternary ammonium ion include a tetramethylammonium ion, a tetraethylammonium ion, a tetrabenzylammonium ion, a trimethyldodecylammonium ion, a tetrabutylammonium ion, and a dimethylpiperidinium ion. M⁺ is preferably a sodium ion or potassium ion. The use amount of the oxy anion in the general formula (3) is preferably from 1 to 5 equivalents, more preferably from 1.0 to 1.2 equivalents relatively to the halogen group of the general formula (2). A solvent for carrying out this reaction is not particularly limited, and is preferably a polar solvent since the reaction is a nucleophilic substitution reaction. The solvent is, for example, tetrahydrofuran, dioxane, diethyl ether, acetone, dimethylsulfoxide, dimethylformamide, dimethylacetamide, hexamethylphosphoric triamide, or acetonitrile. The temperature at which the reaction is conducted is not limited, and is generally from 0 to 150°C. The temperature is preferably from room temperature to 100°C in order to keep the polymerizable terminal group.

### «Vinyl monomer (b) having a phosphate group»

The curable composition of the present invention contains a vinyl monomer (b) selected from
2-((meth)acryloyloxyethyl acid phosphate),
2-(meth)acryloyloxypropyl phosphate,
2-(meth)acryloyloxy-3-chloropropyl phosphate, and
2-(meth)acryloyloxyethylphenyl phosphate.

The addition amount of the vinyl monomer (b) having a phosphate group in the curable composition of the present invention is preferably from 0.1 to 100 parts by weight for 100 parts by weight of the vinyl polymer (a). The amount is preferably from 0.5 to 70 parts by weight, more preferably from 1 to 50 parts by weight from the viewpoint of the balance between the mechanical strength, the compatibility and the thixotropy.

About the vinyl monomer (b) having a phosphate group in the curable composition of the present invention, one kind thereof or a combination of two or more kinds thereof may be used.

### «Vinyl monomer (C) having a cyclic structure»

The curable composition of the present invention may further contain (c) a vinyl monomer having a cyclic structure. When the vinyl monomer (b) having a phosphate group and the vinyl monomer (C) having a cyclic structure are used together with each other, there is produced an advantage that the adhesive property onto a substrate is improved.

The vinyl monomer (C) having a cyclic structure is not particularly limited, and is preferably a cyclic structure having (meth)acrylic monomer from the viewpoint of the reactivity thereof. The cyclic structure may be an alicyclic structure or an aromatic ring. From the viewpoint of the supply of adhesive property, an alicyclic structure is preferred, and a polycyclic structure is more preferred.

Specific examples of the vinyl monomer (C) having a cyclic structure include styrene, α-methylstyrene, cyclohexyl (meth)acrylate, isobornyl (meth)acrylate, dicyclopentenyl (meth)acrylate, dicyclopentenyloxyethyl (meth)acrylate, dicyclopentanyl (meth)acrylate, benzyl (meth)acrylate, nonylphenoxypolyethylene glycol (meth)acrylate, nonylphenoxypolyethylene glycol (meth)acrylate, pentamethylpiperidyl (meth)acrylate and the like.

The vinyl monomer (C) having a cyclic structure may have two or more polymerizable groups.

The addition amount of the vinyl monomer (C) having a cyclic structure is from 0.1 to 1000 parts by weight for 100 parts by weight of the vinyl polymer (a). The amount is preferably from 0.5 to 500 parts by weight, more preferably from 1 to 100 parts by weight from the viewpoint of the balance between the mechanical strength and the thixotropy.

### <<Initiator (d)>>

The curable composition of the present invention may contain further (d) an initiator. The initiator (d) is not particularly limited, and examples thereof include a thermopolymerization initiator, a photopolymerization initiator, and a redox initiator.

The thermopolymerization initiator, the photopolymerization initiator, and the redox initiator may each be used alone, or a mixture of two or more thereof may be used. When these are used in the form of a mixture, the use amounts of the individual initiators are preferably in respective ranges that will be described later.

The thermopolymerization initiator is not particularly limited, and examples thereof include azo initiators, peroxide initiators, and persulfate initiators. These thermopolymerization initiators may be known initiators. Examples thereof include initiators described in paragraphs [0104] to [0106] of JP-A-2006-2654884.

The thermopolymerization initiator is preferably selected, in particular, from the group consisting of azo initiators and peroxide initiators, and is more preferably selected from 2,2'-azobis(methyl isobutyrate), t-butylperoxy pivalate, di(4-t-butylcyclohexyl)peroxy dicarbonate, t-butylperoxyisopropyl monocarbonate and benzoyl peroxide, and mixtures thereof.

As for the thermopolymerization initiator, one kind thereof may be used, or two or more kinds thereof may be used together.

When a thermopolymerization initiator is used as the component (d), the thermopolymerization initiator is present in a catalytically effective amount. The addition amount thereof is not particularly limited. The amount is preferably from about 0.01 to 5 parts by weight, more preferably from about 0.025 to 2 parts by weight for 100 parts by weight of the total of the components (a) and (b) in the present invention (the total of the components (a), (b) and (c) when the composition contains the component (c)).

The redox (oxidation and reduction) initiator can be used in a wide temperature range. Initiator species described below can be favorably used at ordinary temperature. Appropriate species of the redox initiator are not limited, and are, for example, species described in paragraph [0109] of JP-A-2006-2654884.

The redox initiator is preferably a combination of an organic peroxide with a tertiary amine, or a combination of an organic peroxide with a transition metal, and is more preferably a combination of cumene hydroperoxide with an aniline, or a combination of cumene hydroperoxide with cobalt naphthate.

About the redox initiator, one kind thereof may be used, or two or more kinds thereof may be used together.

When a redox initiator is used as the component (d), the redox initiator is present in a catalytically effective amount. The addition amount thereof is not particularly limited. The amount is preferably from about 0.01 to 5 parts by weight, more preferably from about 0.025 to 2 parts by weight for 100 parts by weight of the total of the components (a) and (b) in the present invention (the total of the components (a), (b) and (c) when the composition contains the component (c)).

When the curable composition is cured by an active energy beam, the composition preferably contains a photopolymerization initiator. Examples of the photopolymerization initiator include a radical photoinitiator, and a photo-anionic initiator. Examples of the radical photoinitiator include initiators described in paragraph [0097] of JP-A-2006-265488. Additional examples thereof include acylphosphineoxide radical photoinitiators such as 2,4,6-trimethylbenzoyl-diphenyl-phosphineoxide, bis(2,4,6-trimethylbenzoyl)-phenylphosphineoxide, bis(2,6-dimethylbenzoyl)-2,4,4-trimethyl-pentylphosphineoxi de, 2,4,6-trimethylbenzoyl-diphenyl-phosphineoxide and the like.

The radical photoinitiator is more preferably 1-hydroxy-cyclohexyl-phenyl-ketone, 2-hydroxy-2-methyl-1-phenyl-propane-1-one, bis(4-dimethylaminiophenyl) ketone, 2,4,6-trimethylbenzoyl-diphenyl-phosphineoxide, bis(2,4,6-trimethylbenzoyl)-phenylphosphineoxide, bis(2,6-dimethylbenzoyl)-2,4,4-trimethyl-pentylphosphineoxi de, and 2,4,6-trimethylbenzoyl-diphenyl-phosphineoxide from the viewpoint of the balance between the curability and the storage stability of the curable composition of the present invention.

Examples of the photo-anionic initiator include 1,10-diaminodecane, 4,4'-trimethylenedipiperazine, carbamates and derivatives thereof, cobalt-amine complexes, aminooxyiminos, ammonium borates and the like.

As a near infrared photopolymerization initiator, a near infrared ray absorptive cation dye or the like may be used. It is preferred to use, as the near infrared ray absorptive cation dye, for example, a near infrared ray absorptive cation dye/borate anion complex disclosed in JP-A-3-111402, JP-A-5-194619 and the like, which is excited by energy of a light ray in the range of 650 to 1500 nm. It is more preferred to use a boron-based sensitizer together.

As for the photopolymerization initiator, one kind may be used, or two or more kinds thereof may be used in a mixture form. The initiator may be used in combination with a different compound.

Specific examples of the combination with the different compound include a combination with an amine such as diethanolamine, dimethylethanolamine, triethanolamine and the like, a combination wherein the combination is further combined with a iodonium salt such as diphenyliodonium chloride and the like, and a combination with a colorant such as methylene blue and the like, and an amine.

When the photopolymerization initiator is used, a polymerization inhibitor, such as hydroquinone, hydroquinone monomethyl ether, benzoquinone, p-tert-butylcatechol and the like, may be optionally added thereto.

When a photopolymerization initiator is used as the component (d), the addition amount thereof is not particularly limited and is preferably from about 0.001 to 10 parts by weight for 100 parts by weight of the total of the components (a) and (b) (the total of the components (a), (b) and (c) when the composition contains the component (c)) from the viewpoint of the curability and the storage stability thereof.

### «Curable composition»

The curable composition of the present invention is a composition containing the components (a) and (b) and optionally containing the component (c); in order to adjust physical properties thereof, various additives may be appropriately blended therewith as the need arises, the examples of the additives including a polymerizable monomer and/or oligomer curability adjustor, a metal soap, a filler, fine hollow particles, a plasticizer, an adhesion-imparting agent, a solvent, a flame retardant, an antioxidant, a light stabilizer, an ultraviolet absorber, a physical property adjustor, a radical inhibitor, a metal inactivating agent, an antiozonant, a phosphorus-containing peroxide decomposer, a lubricant, a pigment, a foaming agent, a photocurable resin and the like. These various additives may be used alone or in combination of two or more thereof.

### <Polymerizable monomer and/or oligomer>

To the curable composition of the present invention may be added a monomer and/or an oligomer as far as the advantageous effects of the present invention are not damaged. The monomer and/or oligomer is/are preferably a monomer and/or oligomer having a radical polymerizable group, or a monomer and/or oligomer having an anion polymerizable group from the viewpoint of the curability thereof.

Examples of the radical polymerizable group include (meth) acryloyl groups such as (meth) acrylic groups and the like, a styrene group, an acrylonitrile group, vinyl ester groups, an N-vinylpyrrolidone group, acrylamide groups, conjugated diene groups, vinyl ketone groups, vinyl chloride groups and the like. Particularly preferred is an anion polymerizable group having a (meth)acryloyl group, which is similar to the vinyl polymer used in the present invention.

Examples of the anion polymerizable group include (meth)acryloyl groups such as (meth)acrylic groups, a styrene group, an acrylonitrile group, an N-vinylpyrrolidone group, an acrylamide group, conjugated diene groups, and vinyl ketone groups. Particularly preferred is a group having a (meth) acryloyl group, which is similar to the vinyl polymer used in the present invention.

Specific examples of the monomer include monomers described in paragraphs [0123] to [0131] of JP-A-2006-265488.

Examples of the oligomer include oligomers described in paragraph [0132] of JP-A-2006-265488.

Of the above-mentioned monomers and oligomers, monomers and/or oligomers having a (meth)acryloyl group are preferred. The number-average molecular weight of the monomers and/or oligomers having a (meth)acryloyl group is preferably 5000 or less. When any one of the monomers is used in order to improve the surface curability, and decrease the viscosity for an improvement in the workability, the molecular weight is more preferably 1000 or less since the monomer is good in compatibility.

The use amount of the polymerizable monomer and/or oligomer is preferably from 1 to 200 parts by weight (the wording may be referred to merely as parts), from 5 to 100 parts for 100 parts of the total of the components (a) and (b) (the total of the components (a), (b) and (c) when the composition contains the component (c)) from the viewpoint of an improvement on the surface curability, the supply of toughness, and the workability based on a decrease in the viscosity.

### <Metal soap>

The curable composition of the present invention may further contain a metal soap if necessary in order to make the mold-releasability high.

The metal soap is not particularly limited, and is generally a substance wherein a long-chain aliphatic acid and a metal ion are bonded to each other, and may be any known metal soap that has, in a single molecule thereof, a non-polar moiety or low polar moiety based on the aliphatic acid and a polar moiety based on the portion thereof bonded to the metal.

Examples of the long-chain aliphatic acid include saturated aliphatic acids having 1 to 18 carbon atoms, unsaturated aliphatic acids having 3 to 18 carbon atoms, and aliphatic dicarboxylic acids. Of these acids, saturated aliphatic acids having 1 to 18 carbon atoms are preferred from the viewpoint of the availability thereof. Saturated aliphatic acids having 6 to 18 carbon atoms are particularly preferred from the viewpoint of the effect of the releasability. Examples of the metal ion include alkali metals (lithium, sodium, and potassium), alkaline earth metals (magnesium, calcium, and barium), zinc, lead, cobalt, aluminum, manganese, strontium and the like.

Specific examples thereof include metal soaps described in paragraph [0155] of JP-A-2005-232419.

Of these metal soaps, stearic metal salts are preferred from the viewpoint of the availability and the safety. Most preferred are one or more selected from the group consisting of calcium stearate, magnesium stearate and zinc stearate, in particular, from the viewpoint of economical efficiency.

The addition amount of this metal soap is not particularly limited. The soap is used preferably in an amount of 0.025 to 5 parts by weight, more preferably in an amount of 0.05 to 4 parts by weight for 100 parts by weight of the total of the components (a) and (b) (the total of the components (a), (b) and (c) when the composition contains the component (c)). If the blend amount is more than 5 parts by weight, physical properties of the cured product tend to fall. If the amount is less than 0.025 parts by weight, the composition tends not to gain mold-releasability easily.

### <Filler>

The filler is not particularly limited, and examples thereof include fillers described in paragraph [0158] of JP-A-2005-232419.

Of these fillers, preferred are crystalline silica, fused silica, dolomite, carbon black, calcium carbonate, titanium oxide, talc, and the like.

In the case of desiring to obtain cured products high in strength by effect of these fillers, a filler selected mainly from the following may be added: crystalline silica, fused silica, anhydrous silicic acid, hydrated silicic acid, carbon black, surface-treated fine calcium carbonate, calcined clay, clay, activated zinc flower and the like. Particularly preferred is silica in the form of superfine grains having a specific surface area (according to the BET adsorption method) of 50 m²/g or more, usually from about 50 to 400 m²/g, preferably from about 100 to 300 m²/g. More preferred is the silica the surface of which is beforehand subjected to hydrophobicity-imparting treatment with an organic silicon compound such as an organosilane, organosilazane, or diorganopolysiloxane.

In the case of desiring to obtain a cured product having a low strength and a large elongation, a filler selected mainly from the following may be added: titanium oxide, calcium carbonate, talc, ferric oxide, zinc oxide, Shirasu balloons and the like. When calcium carbonate is small in specific surface area, a cured product therefrom is not generally sufficient in improvement in breaking strength and breaking elongation. As the value of the specific surface is larger, the effect of improving the breaking strength and breaking elongation of the cured product is larger.

It is more preferred that calcium carbonate be subjected to surface treatment with a surface-treating agent. When the surface-treated calcium carbonate is used, it appears that the workability of the curable composition of the present invention is made better and the storage stability effect of the curable composition is made better than a case where calcium carbonate not subjected to any surface treatment is used.

The surface-treating agent may be a known agent, and examples thereof include surface-treating agents described in paragraph [0161] of JP-A-2005-232419.

The treating amount of this surface-treating agent is preferably from 0.1 to 20% by weight of that of calcium carbonate, more preferably from 1 to 5% by weight thereof. If the treating amount is less than 0.1% by weight, the effect of improving the workability may be insufficient. If the amount is more than 20% by weight, the storage stability of the curable composition may lower.

When calcium carbonate is used, the kinds thereof are not particularly limited; in the case of expecting, in particular, an effect of improving the thixotropy of the blend, the breaking strength and breaking elongation of the cured product, and the like, it is preferred to use colloidal calcium carbonate.

Calcium carbonate described in paragraph [0163] of JP-A-2005-232419 may be used, wherein ground calcium carbonate may be added to increase the amount of the blend, decrease costs and attain other purposes.

About the filler, one kind thereof may be used, or two or more kinds thereof may be used together in accordance with the purpose or need. When the filler is used, the addition amount thereof is preferably from 5 to 1000 parts by weight, more preferably from 20 to 500 parts by weight, in particular preferably from 40 to 300 parts by weight for 100 parts by weight of the total of the components (a) and (b) (the total of the components (a), (b) and (c) when the composition contains the component (c)). If the blend amount is less than 5 parts by weight, the effect of improving the breaking strength, breaking elongation, adhesive property and weather resistance adhesive property of the cured product may be insufficient. If the amount is more than 1000 parts by weight, the workability of the curable composition may fall.

### <Fine hollow particles>

Fine hollow particles may be used together with the filler for reinforcement, and these may be added in order to make the composition light and decrease costs without lowering physical properties thereof largely.

The fine hollow particles, which may be referred to as "balloons" hereinafter, are not particularly limited, and are preferably hollow bodies made of inorganic or organic material (inorganic balloons or organic balloons) and having a diameter of 1 mm or less, preferably 500 µm or less, more preferably 200 µm or less, as described in "Latest Technique of Functional Filler" (CMC). The fine hollow particles are in particular preferably fine hollow bodies having a true specific gravity of 1.0 g/cm³ or less, more preferably fine hollow bodies having a true specific gravity of 0.5 g/cm³ or less.

The inorganic balloons and the organic balloons may be balloons described in paragraphs [0168] to [0170] of JP-A-2005-232419.

About the balloons, one kind thereof may be used, or two or more kinds thereof may be used in a mixture form. Furthermore, the surfaces of the balloons may be treated with an aliphatic acid, an aliphatic acid ester, rosin, lignin rosinate, a silane coupling agent, a titanium coupling agent, an aluminum coupling agent, polypropylene glycol, or the like in order to improve the dispersibility and the workability of the blend. The balloons are used to lighten the product obtained when the blend is cured and decrease costs without damaging the flexibility, the elongation nor the strength out of physical properties of the product.

The addition amount of the balloons is not particularly limited, and is preferably from 0.1 to 50 parts by weight, more preferably from 0.1 to 30 parts by weight for 100 parts by weight of the total of the components (a) and (b) (the total of the components (a), (b) and (c) when the composition contains the component (c)). If this amount is less than 0.1 parts by weight, the effect of lightening the product is small. If the amount is more than 50 parts by weight, the tensile strength, out of the mechanical properties (of the product obtained) when the blend is cured, may fall. When the specific gravity of the balloons is 0.1 or more, the addition amount thereof is preferably from 3 to 50 parts by weight, more preferably from 5 to 30 parts by weight.

### <Antioxidant>

In the curable composition of the present invention, various antioxidants may be used as the need arises. Examples of the antioxidants include p-phenylenediamine type antioxidants, amine type antioxidants, hindered phenol type antioxidants and the like. As a secondary antioxidant, phosphorus-containing antioxidants, sulfur-containing antioxidants and the like are given.

### <Plasticizer>

A plasticizer may be incorporated into the curable composition of the present invention as the need arises.

The plasticizer is not particularly limited, and may be, for example, any one of plasticizers described in paragraph [0173] of JP-A-2005-232419 in accordance with the adjustment of the physical properties, the adjustment of the nature, and some other purpose. Of these plasticizers, preferred are a polyester plasticizer and a vinyl polymer since these produce a remarkable effect of decreasing the viscosity, and are low in volatilization-off percentage at the time of a heat resisting test. The addition of a polymeric plasticizer which is a polymer having a number-average molecular weight of 500 to 15000 favorably makes it possible to adjust the viscosity of the curable composition, and the tensile strength, the elongation and other mechanical properties of the cured product obtained by curing the curable composition, and further maintain initial physical properties thereof over a longer term than the use of a low-molecular-weight plasticizer, which is a compound containing, in the molecule thereof, no polymeric component. This polymeric plasticizer is not limited, and may or may not have a functional group.

The number-average molecular weight of the polymeric plasticizer is from 500 to 15000 as described above, and is preferably from 800 to 10000, more preferably from 1000 to 8000. If the molecular weight is too low, the plasticizer flows out with the passage of time when the composition is exposed to heat or contacts a liquid. Thus, the initial physical properties may be unable to be maintained over a long term. If the molecular weight is too high, the viscosity is high so that the workability tends to deteriorate.

Of these polymeric plasticizers, those compatible with a vinyl polymer are preferred. Particularly preferred are vinyl polymers from the viewpoint of the compatibility, the weather resistance and the heat ageing resistance thereof. Of the vinyl polymers, a (meth)acrylic polymer is preferred and an acrylic polymer is more preferred. The method for synthesizing this acrylic polymer may be a product obtained by a conventional solution polymerization, or a solvent-free type acrylic polymer. The latter acrylic plasticizer is produced by a high-temperature continuous polymerization method (USP No. 4414370, JP-A-59-6207, JP-B-5-58005, JP-A-1-313522, and USP No. 5010166) without using any solvent or chain transfer agent. Thus, the acrylic plasticizer is preferred for the object of the present invention. The plasticizer is not particularly limited, and examples thereof include products synthesized by Toa, UP series (see the October issue of "Industrial Materials", which is a Japanese journal, in 1999). Of course, living radical polymerization can be given as a different synthesis method. According to this method, favorably, the molecular weight distribution of the resultant polymer is narrow and the viscosity can be made low. Furthermore, atom transfer radical polymerization is more preferred; however, the synthesis method is not limited to this.

The molecular weight distribution of the polymeric plasticizer is not particularly limited, and is preferably narrow. The distribution is preferably less than 1.8, more preferably 1.7 or less, even more preferably 1.6 or less, even more preferably 1.5 or less, in particular preferably 1.4 or less, most preferably 1.3 or less.

About the plasticizer, which may be a polymeric plasticizer, one kind thereof may be used, or two or more kinds thereof may be used together. However, the plasticizer is not necessarily required. The polymeric plasticizer is used and further a low-molecular-weight plasticizer may be used together as the need arises as far as a bad effect is not produced onto the physical properties.

These plasticizers may be blended when the polymer is produced.

When the plasticizer is used, the use amount thereof is not limited. The use amount is preferably from 1 to 100 parts by weight, more preferably from 5 to 50 parts by weight for 100 parts by weight of the total of the components (a) and (b) (the total of the components (a), (b) and (c) when the composition contains the component (c)). If the amount is less than 1 part by weight, effects of the plasticizer tend not to be easily expressed. If the amount is more than 100 parts by weight, the mechanical strength of the cured product tends to be insufficient.

Besides the plasticizer, a reactive diluting agent described below may be used in the present invention.

The reactive diluting agent is in particular preferably an organic compound having a boiling point of 100°C or more at ordinary temperature for the following reason: when a low-boiling-point compound, as may volatilize while the composition is cured, is used as the reactive diluting agent, the shape changes before and after the curing and a volatile matter produces a bad effect onto the environment.

Specific examples of the reactive diluting agent include 1-octene, 4-vinylcyclohexene, allyl acetate, 1,1-diacetoxy-2-propene, methyl 1-undecenoate, 8-acetoxy-1,6-octadiene and the like. However, the agent is not limited thereto.

The addition amount of the reactive diluting agent is preferably from 0.1 to 100 parts by weight, more preferably from 0. 5 to 70 parts, even more preferably from 1 to 50 parts by weight for 100 parts by weight of the total of the components (a) and (b) (the total of the components (a), (b) and (c) when the composition contains the component (c)).

### <Light stabilizer>

A light stabilizer may be added to the curable composition of the present invention as the need arises. As the light stabilizer, various kinds are known. Examples thereof include various agents described "Antioxidant Handbook" published by Taiseisha Ltd., "Degradation and Stabilization of Polymeric Material" (235-242) manufactured by CMC Kagaku (transliterated), and the like. However, the stabilizer is not limited thereto.

Of the light stabilizers, ultraviolet absorbents, which are not limited to especial types, are preferred. Specific examples thereof include benzotriazole compounds such as TINUVIN P, TINUVIN 234, TINUVIN 320, TINUVIN 326, TINUVIN 327, TINUVIN 329 and TINUVIN 213 (each manufactured by Nihon Ciba-Geigy K.K.), triazine compounds such as TINUVIN 1577, benzophenone compounds such as CHIMASSORB 81, and benzoate compounds such as TINUVIN 120 (manufactured by Nihon Ciba-Geigy K.K.).

Hindered amine compounds are also preferred, and specific examples of the compounds include compounds described in JP-A-2006-274084. However, the amine compounds are not limited thereto.

A combination of an ultraviolet absorbent with a hindered amine compound produces a larger effect in some cases; thus, the use of the combination may be allowable although an allowable manner of using the light stabilizer is not limited to the combination use. The combination use is preferred in some cases.

The light stabilizer may be used together with the above-mentioned antioxidant. The combination use produces a larger effect and makes an improvement, in particular, on the weather resistance. Thus, the use is particularly preferred. It is allowable to use TINUVIN C353 or TINUVIN B75 (manufactured by Nihon Ciba-Geigy K.K.), or some other product wherein a light stabilizer and an antioxidant are beforehand mixed with each other.

The use amount of the light stabilizer is preferably from 0.1 to 10 parts by weight for 100 parts by weight of the total of the components (a) and (b) (the total of the components (a), (b) and (c) when the composition contains the component (c)). In a case where the amount is less than 0.1 parts by weight, the effect of improving the weather resistance is small. In a case where the amount is more than 10 parts by weight, a large difference in the effect is not generated from the other cases. Thus, the economical efficiency is bad.

### <Adhesion-imparting agent>

An adhesion-imparting agent may be added to the curable composition of the present invention in order to improve the adhesive property onto a substrate. The adhesion-imparting agent is preferably a crosslinkable-silyl-group-containing compound, more preferably a silane coupling agent.

Specific examples thereof include adhesion-imparting agents described in paragraph [0184] of JP-A-2005-232419.

As far as hydrosilylation reaction is not hindered, it is allowable to use a silane coupling agent having, in the molecule thereof, both of a crosslinkable silyl group, and an organic group having an atom other than carbon and hydrogen atoms, such as an epoxy group, an isocyanate group, an isocyanurate group, a carbamate group, an amino group, a mercapto group, a carboxyl group, a halogen group, a (meth)acrylic group or the like.

Specific examples thereof include silane coupling agents described in paragraph [0185] of JP-A-2005-232419, which each have both of a crosslinkable silyl group, and an organic group having an atom other than carbon and hydrogen atoms.

Of these agents, more preferred are alkoxysilanes each having in the molecule thereof an epoxy group or a (meth) acrylic group from the viewpoint of the curability and the adhesive property.

These may be used alone or in combination of two or more thereof.

Adhesion-imparting agents other than the silane coupling agent are not particularly limited, and specific examples thereof include an epoxy resin, a phenol resin, a modified phenol resin, a cyclopentadiene-phenol resin, a xylene resin, a cumarone resin, a petroleum resin, a terpene resin, a terpene phenol resin, rosin ester resin sulfur, alkyl titanates, aromatic polyisocyanates and the like.

In order to make the adhesive property better, a crosslinkable silyl group condensing catalyst may be used together with the above-mentioned adhesion-imparting agent. Examples of the crosslinkable silyl group condensing catalyst include catalysts described in paragraph [0187] of JP-A-2005-232419.

The adhesion-imparting agent is incorporated preferably in an amount of 0.01 to 20 parts by weight for 100 parts by weight of the total of the components (a) and (b) (the total of the components (a), (b) and (c) when the composition contains the component (c)). If the amount is less than 0.01 parts by weight, the effect of improving the adhesive property is small. If the amount is more than 20 parts by weight, physical properties of the cured product tend to deteriorate easily. The amount is preferably from 0.1 to 10 parts by weight, more preferably from 0.5 to 5 parts by weight.

About the adhesion-imparting agent, one kind thereof may be used, or two or more kinds thereof may be used in a mixture form.

### <Solvent>

A solvent may be blended with the curable composition of the present invention as the need arises.

Examples of the solvent that can be blended include aromatic hydrocarbon solvents such as toluene, xylene and the like; ester solvents such as ethyl acetate, butyl acetate, amyl acetate, cellosolve acetate and the like; ketone solvents such as acetone, methyl ethyl ketone, methyl isobutyl ketone, isobutyl ketone and the like, and the like. These solvents may be used when the polymer is produced.

### <Other additives>

Various additives may be added to the curable composition of the present invention as the need arises in order to adjust various physical properties of the curable composition or the cured product therefrom. Examples of the additives include a flame retardant, an anti-ageing agent, a radical inhibitor, a metal inactivating agent, an antiozonant, a phosphorus-containing peroxide decomposer, a lubricant, a pigment, and a foaming agent. These additives may be used alone or in combination of two or more thereof.

Specific examples of the additives include additives described in the individual specifications of JP-B-4-69659, JP-B-7-108928, JP-A-63-254149, and JP-A-64-22904.

### «Method for producing the cured product»

The curable composition of the present invention may be prepared into a one-liquid type, wherein all the blend components are beforehand blended with each other and sealed, or may be prepared into a two-liquid type, wherein an A liquid in which any initiator only is excluded is mixed with a B liquid in which an initiator is mixed with a filler, a plasticizer, a solvent and the like just before the composition is shaped.

### «Cured product»

The cured product of the present invention is a product obtained by curing the curable composition.

The method for curing the curable composition is not particularly limited.

When a thermopolymerization initiator is used as the component (d), the curing temperature is varied in accordance with kinds of the used thermopolymerization initiator, vinyl polymer (a), vinyl monomer (b) having a phosphate group, and vinyl monomer (C) having a cyclic structure, and added other compounds or additives. Usually, the temperature is preferably from 50 to 250°C, more preferably from 70 to 200°C.

When a photopolymerization initiator is used as the component (d), the curable composition is irradiated with light rays or an electron beam from an active energy beam source, whereby the composition can be cured.

The active energy beam source is not particularly limited. The source to be used may be, for example, a high-pressure mercury lamp, a low-pressure mercury lamp, an electron beam emitting device, a halogen lamp, a light emitting diode, a semiconductor laser, or a metal halide in accordance with the nature of the used photopolymerization initiator.

When a photopolymerization initiator is used as the component (d), the curing temperature is preferably from 0 to 150°C, more preferably from 5 to 120°C.

When a redox initiator is used as the component (d), the curing temperature is preferably from -50 to 250°C, more preferably from 0 to 180°C.

### «Shaping method»

When the curable composition of the present invention is a shaped body, the method of the shaping is not particularly limited and various generally-used shaping methods may be used. Examples thereof include casting molding, compression molding, transfer molding, injection molding, extrusion molding, rotational molding, slush molding, thermoforming and the like. The shaping method is preferably roll molding, calendaring, extrusion molding, liquid injection molding, and injection molding.

### «Usage»

The usage of the curable composition of the present invention is not particularly limited, and the composition is preferably used for a sealant (examples of which include a sealant for building, an oil sealant and a gasket), an electrical/electronic component material, an electrical insulating member such as an insulating coating member for electric wires and cables, an adhesive agent, a tackifier, an electrical/electronic potting agent, a heat radiating member, a vibration-proof/vibrating controlling/vibration-free member, a film, or a casting material. The composition may be used for various usages, such as a waterproof member, a marine deck caulking, a material for cars, a coating member, a foamed body, an O-ring, a packing, a hose, a tube, a roll, a diaphragm, and various shaping materials.

For example, in the field of cars, the curable composition may be used, as a body component, for a sealant for keeping airtightness, a vibration-proof member for glass, or a vibration-proof member for car body moieties, in particular, a window sealing gasket or a gasket for a door glass plate. The composition may be used, as a chassis component, for a vibration-proof or soundproof engine- or suspension-rubber, in particular, an engine mounting rubber. The composition may be used, as an engine component, for hoses for cooling, fuel-supply, gas-absorption, exhaust and other purpose, such as a transmission oil cooler hose, an engine oil cooler hose, an air duct hose, a turbo inter-cooler hose, a hot air hose, a radiator hose, a power stealing hose, a fuel hose, a drain hose and the like; gaskets, such as an engine cam cover or oil pan gasket, an oil pump gasket, a power stealing vane pump gasket, an intake manifold gasket, a throttle body gasket, a compressor gasket, a timing belt covering gasket, clank shaft sealing gasket, a camshaft sealing gasket, transmission sealing gasket and the like; various rubbery components, such as various O-rings, an oil seal, a power stealing sealing belt covering seal, a seal washer, an oil receiver, a plug tube seal, a squeeze packing, a lip seal packing, a bore plug, an injection pipe seal, a brake drum seal, connector seals for a wire harness and the like, an oil level gauge, a breather, a valve, and a diaphragm; O-rings for a fuel injection device, a fuel heating device, an air dumper, a pressure detecting device, an oil cooler of a resin tank for a heat exchanger, a variable compression ratio engine, a cylinder device, a regulator for compressed natural gas, a pressing container, a fuel supplying system of an inner-cylinder direct-injection combustion engine, or a high-pressure pump; potting members for an igniter HIC or a hybrid IC for cars; an isokinetic joint boot member and a rack-and-pinion gear boot member; a coating member for an engine control substrate; a mall; a head lamp lens; or an adhesive for a sunroof seal or a mirror. The composition may be used for an exhaust gas clarifying device component, or a brake component.

In the field of electricity, the composition may be used for a coating, a potting, a packing, an O-ring, a belt and the like. Specifically, the composition is used for the following: a buffer member for a thick-film resistor for high voltage, a circuit element of a hybrid IC, an HIC, an electrically insulating component, a semiconductor component, an electroconductive component, a module, a printed circuit, a ceramic substrate, a diode, a transistor or a bonding wire, a coating member for a semiconductor element or an optical fiber for optical communication, a potting member for a transformer high-voltage circuit, a printed substrate, a variable-resistance-attached transformer for high voltage, an electrically insulating component, a semiconductor component, an electroconductive component, a solar cell, or a flyback transformer for television, a sealant for sealing the back surface of a heavy electrical component, a light electrical component or a solar cell or for a circuit or substrate of an electrical/electronic instrument, decorations of lighting equipment, waterproof packings, vibration-proof rubbers, mothproof packings, a vibration-proof and soundproof air sealant for a cleaner, a drip-proof cover for an electrical calorifier, a packing for a heater region, a packing for an electrode region, a safety valve diaphragm, hoses for a drink-pouring instrument, a waterproof packing, an electromagnetic valve, waterproof packings for a steam microwave oven, a thermos and a rice cooker, a water supplying tank packing, a water absorbing valve, a water-receiving packing, a connecting hose, a belt, a temperature-keeping heater region packing, a seal for a vapor spout, an oil packing for a burning appliance, an O-ring, a drain packing, a pressing tube, a blast tube, an air-sending/absorbing packing, a vibration-proof rubber, an oil supply port packing, an oil gauge packing, an oil transfer tube, a diaphragm valve, an air sending tube, or a rubber component for an acoustic appliance, such as a speaker gasket, a speaker edge, a turntable seat, a belt or a pulley. The composition may also be used for a cathode ray tube wedge, a neck, an adhesive agent for an electrically insulating component, a semiconductor component or an electroconductive component, a mending member for an electric wire coat, an insulating sealant for an electric wire joint component, a roll for an OA machine, a wiper for ink, a vibration-absorbing agent, a gel or the like.

In the field of building, the composition may be used for a gasket for structure (zipper gasket), an air-membrane-structure roof member, a waterproof member, a shape-fixed sealant, a vibration-proof member, a soundproof member, a setting block, a sliding member or the like.

In the field of sports, the composition may be use for an all-weather paving member or a gymnasium floor as a sports floor, a sole member or an insole member for sports shoes, a golf ball as a ball for ball game, or the like.

In the field of vibration-proof rubbers, the composition may be used as a vibration-proof rubber for cars, a vibration-proof rubber for railway vehicles, a vibration-proof rubber for aircrafts, a fender or the like.

### Examples

Hereinafter, the present invention will be described in more detail by way of working examples; however, the present invention is not limited to the examples.

In the working examples, any "number-average molecular weight" and any "molecular weight distribution (any ratio between weight-average molecular weight and number-average molecular weight)" were each calculated by a standard polystyrene conversion method using gel permeation chromatography (GPC). As GPC columns and a GPC solvent therefor, the following were used: columns into which a polystyrene-crosslinked gel was filled (shodex GPCs K-804 and K-802.5, manufactured by Showa Denko K.K.), and chloroform, respectively.

In the working examples, any "terminal (meth)acryloyl group average number" is the "number of (meth)acryloyl groups introduced per polymer molecule", and was calculated from the number-average molecular weight obtained by ¹H-NMR analysis and GPC.
(The used ¹H-NMR was an ASX-400 manufactured by Bruker Co., and deuterium chloroform was used as a solvent to make the measurement at 23°C.)

In the working examples and comparative examples, the words "part(s)" each represent "part(s) by weight", and the symbols "%" each represent "% by weight".

### (Production Examples 1 and 2)

The use amounts of individual raw materials are shown in Table 1.

### (1) Polymerization step

Acrylic esters (acrylic esters mixed in advance) were deoxygenated. The inside of a stirrer-attached reactor made of stainless steel was deoxygenated. Thereinto were then charged cuprous bromide and a portion of all the acrylic esters (described as "Initially charged monomers" in Table 1), and then the mixture was heated and stirred. Thereto were added acetonitrile (described in "Acetonitrile for polymerization" in Table 1) and diethyl 2,5-dibromoadipate (DBAE) as an initiator. The components were mixed with each other. At a stage when the temperature of the liquid mixture was adjusted to about 80°C, pentamethyldiethylenetriamine (abbreviated to the triamine hereinafter) was added thereto to start polymerization reaction. The other portions of the acrylic esters (described as "Additional monomers" in Table 1) were added thereto bit by bit in order to advance the polymerization reaction. In the middle of the polymerization, the triamine was appropriately added thereto to adjust the polymerization rate. The total amount of the triamine used in the polymerization is shown as "Triamine for polymerization" in Table 1. The internal temperature was raised by polymerization heat when the polymerization advanced; therefore, the polymerization was advanced while the internal temperature was adjusted to about 80 to 90°C.

### (2) Oxygen treatment step

When the monomer conversion rate (polymerization reaction rate) turned to about 95% or more, an oxygen-nitrogen mixed gas was introduced into the gas phase in the reactor. While the internal temperature was kept at about 80 to 90°C, the reaction solution was heated and stirred for several hours to bring oxygen into contact with the polymerization catalyst in the reaction solution. Under reduced pressure, acetonitrile and unreacted fractions of the monomers were volatilized and removed to yield a concentrate containing a polymer. The concentrate was in a remarkable colored state.

### (3) First rough purification

Toluene was used as a solvent for diluting the polymer. The concentrate in the item (2) was diluted with toluene the amount of which was from about 100 to 150 kg for 100 kg of the polymer. Thereto were added a filtration aid (RADIOLITE R900, manufactured by Showa Chemical Industry Co., Ltd.), and absorbents (KYOWARD 700SEN, and KYOWARD 500SH). An oxygen-nitrogen mixed gas was introduced into the gas phase in the reactor, and then the diluted concentrate was heated and stirred at about 80°C for several hours. An insoluble fraction of the catalyst component was filtrated and removed. The filtrate was colored and slightly clouded by the residue of the polymerization catalyst.

### (4) Second rough purification

The filtrate was charged into a stirrer-attached reactor made of stainless steel, and absorbents (KYOWARD 700SEN, and KYOWARD 500SH) were added thereto. An oxygen-nitrogen mixed gas was introduced into the gas phase, and the solution was heated and stirred at about 100°C for several hours. Thereafter, the absorbents and other insoluble components were filtrated and removed. The filtrate was a substantially transparent and colorless, clear liquid. The filtrate was concentrated to yield a substantially transparent and colorless polymer.

### (5) (Meth)acryloyl group introducing step

Into about 100 kg of N,N-dimethylacetoamide (DMAC) was dissolved 100 kg of the polymer, and thereto were added potassium acrylate (about 2 mole equivalents relative to the amount of the terminal Br groups), a heat stabilizer (H-TEMPO: 4-hydroxy-2,2,6,6-tetramethylpiperidine-n-oxyl), and an adsorbent (KYOWARD 700SEN). The resultant mixture was heated and stirred at about 70°C for several hours. DMAC was distilled off under reduced pressure, and the polymer condensate was diluted with toluene, the amount of which was about 100 kg for 100 kg of the polymer. A filtration aid was added thereto, and the solid was separated therefrom by filtration. The filtrate was concentrated to yield an acryloyl group terminated polymer [P1]. The number of the acryloyl groups introduced into the resultant polymer per molecule thereof, the number-average molecular weight thereof, and the molecular weight distribution thereof are together shown in Table 1.

**[Table 1]**

| | | Production Examples 1 | Production Examples 2 |
|---|---|---|---|
| Polymerization step | Charged monomer total amount | | 100 |
| | Initiator species | DBAE | |
| | Initiator amount | 1.76 | 2.59 |
| | n-Butyl acrylate | 100 | 27.6 |
| | Ethyl acrylate | | 39.8 |
| | 2-Methoxyethyl acrylate | | 32.6 |
| | Stearyl acrylate Stearyl | | |
| | All monomers | 100 | 100 |
| | Initially charged monomers | 20 | 20 |
| | Additional monomers | 80 | 80 |
| | CuBr | 0.84 | 0.47 |
| | Triamine for polymerization | 0.14 | 0.15 |
| | Acetonitrile for polymerization | 8.79 | 8.34 |
| Oxygen treatment step | Oxygen treatment | Conducted | Conducted |
| First rough purification step | RADIOLITE R900 (filtration aid) | 1.0 | 0.5 |
| | KW500SH | 0.0 | 0.5 |
| | KW700SEN | 0.0 | 0.5 |
| Second rough purification step | KW500SH | 1.0 | 1.0 |
| | KW700SEL | 1.0 | 1.0 |
| (Meth)acryloyl group introducing step | Potassium acrylate | 1.7 | 2.1 |
| | KW700SEN | 0.4 | 0.4 |
| | H-TEMPO | 0.01 | 0.01 |
| | DMAC | 100 | 100 |
| | RADIOLITE R900 (filtration aid) | 1 | 1 |
| Polymer analyzed values | Number-average molecular weight (Mn) | 22500 | 13800 |
| | Molecular weight distribution (Mw/Mn) | 1.3 | 1.3 |
| | Functional group species | Acryloyl groups | Acryloyl groups |
| | The number of the functional groups per molecule of the polymer | 1.9 | 1.8 |

Polymerization step: The use amount (unit: kg) of each of the components for 100 kg of the monomers
First rough purification to (meth)acryloyl group introducing step: The use amount (unit: kg) of each of the components for 100 kg of the polymer
Initiator: Diethyl 2,5-dibromoadipate (DBAE)

Number-average molecular weight (Mn), and molecular weight distribution (Mw/Mn): These were each calculated according to a standard polystyrene conversion method using gel permeation chromatography (GPC). GPC columns (shodex GPC K-804 and K-802) and a GPC solvent (chloroform) were used.

The number per molecule of the polymer: The concentration was analyzed by ¹H-NMR, and the number was calculated from the number-average molecular weight obtained by GPC.

### (Example 1)

The following were added: 100 parts of the polymer [P1] yielded in Production Example 1 as a component (a); 10 parts of methacrylic monomer having a phosphate group (trade name: LIGHT ESTER P-1M (2-methacryloyloxyethylacid phosphate) manufactured by Kyoeisha Chemical Co., Ltd.) as a component (b); one part of tetrakis[methylene-3-(3,5-di-tert-butyl-4-hydroxyphenyl) propionate]methane (trade name: IRGANOX 1010, manufactured by Ciba Specialty Chemicals Inc.) as an antioxidant; 0.2 part of 2-hydroxy-2-methyl-1-phenyl-propane-1-one (DAROCUR 1173, manufactured by Ciba Specialty Chemicals Inc.) as a radical photoinitiator; and 0.1 part of bis(2,4,6-trimethylbenzoyl)-phenylphosphineoxide (IRGACURE 819, manufactured by Ciba Specialty Chemicals Inc.) as a radical photoinitiator. The solid components were sufficiently dissolved, and all the components were sufficiently mixed with each other. The solution was heated at 60°C for 1 hour to be degassed. Furthermore, the resultant was cast into a mold frame, and the workpiece was passed through a UV radiating device (LH-6, manufactured by Fusion UV Systems Japan K.K.) once at a lamp energy of 184 W/cm, a radiation length of 54 cm and a speed of 1 m/minute (totalized light quantity = 3030 mJ/cm²) to cure the substance in the frame. In this way, a sheet 2 mm in thickness was yielded. The resultant cured product was used to measure tensile physical properties and the Duro A hardness thereof. Moreover, the curable composition in a bead form was applied onto each of various substrates, and then cured under the above-mentioned conditions. The adhesive physical property of the resultant sample was measured by a 180° peeling method. The composition of the cured product is shown in Table 2, and the results are shown in Table 3.

### <Measuring methods>

### Tensile properties

The resultant sheet was cut out into a size "no. 1/3 dumbbell" in accordance with JIS K 6251 to evaluate the tensile properties.

### Duro A hardness

From the resultant sheet, sheets, 20 x 20 mm in size, were cut out, three of the cut-out sheets were put onto each other, and then the hardness thereof was measured in accordance with JIS K 6253. In this way, the rubber hardness thereof was measured.

### Substrate adhesive property

The beads having a weight of 1 to 2 g and a diameter of about 1 cm were applied onto each of the substrates, 25 x 100 mm in size. Under the above-mentioned conditions, the curable composition was cured by UV rays, and a cutter was used to make a cut having a width of 5 mm to the boundary face between the substrate and the cured product of the resultant cured product sample. The cured product and the substrate were peeled from each other by hand to make a 180-peeling test.

Evaluated results described in Table 3 are as follows:
AF: interfacial failure, and
CF: cohesive failure.

In general, CF, out of the failure modes, shows a result better in adhesive property.

### (Examples 2 to 4)

Each curable composition and each cured product were produced and then physical properties thereof were evaluated in the same way as in Example 1 except that the amount of the methacrylic monomer having a phosphate group in Example 1 was changed to an amount described in the table.

### (Example 5)

A curable composition and a cured product were produced and then physical properties thereof were evaluated in the same way as in Example 1 except that instead of the methacrylic monomer having a phosphate group in Example 1, an acrylic phosphate monomer (product name: LIGHT ACRYLATE P-1A (2-acryloyloxyethylacid phosphate), manufactured by Kyoeisha Chemical Co., Ltd.) was used.

### (Examples 6 to 8)

Each curable composition and each cured product were produced and then physical properties thereof were evaluated in the same way as in Example 5 except that the amount of the acrylic monomer having a phosphate group in Example 5 was changed to each amount in the table.

### (Example 9)

A curable composition and a cured product were produced and then physical properties thereof were evaluated in the same way as in Example 1 except that instead of the methacrylic monomer having a phosphate group in Example 1, 2 parts of an acrylic phosphate monomer (product name: LIGHT ACRYLATE P-1A (2-acryloyloxyethylacid phosphate), manufactured by Kyoeisha Chemical Co., Ltd.) were used, and 10 parts of a (meth)acrylic monomer (FA-512A (dicyclopentenyloxyethyl acrylate) manufactured by Hitachi Chemical Co., Ltd.) were used as a component (c).

### (Example 10)

A curable composition and a cured product were produced and then physical properties thereof were evaluated in the same way as in Example 9 except that the polymer [P1] in Example 9 was changed to the polymer [P2] and the amount of the (meth)acrylic monomer (FA-512A (dicyclopentenyloxyethyl acrylate) manufactured by Hitachi Chemical Co., Ltd.) as the component (c) was changed to 20 parts.

### (Comparative Example 1)

A curable composition and a cured product were produced and then physical properties thereof were evaluated in the same way as in Example 1 except that the methacrylic monomer having a phosphate group in Example 1 was not added.

### (Comparative Example 2)

A curable composition and a cured product were produced and then physical properties thereof were evaluated in the same way as in Example 1 except that instead of the methacrylic monomer having a phosphate group in Example 1, 10 parts of an alicyclic structure containing acrylic monomer (FA-512A (dicyclopentenyloxyethyl acrylate) manufactured by Hitachi Chemical Co., Ltd.) were added.

### (Comparative Example 3)

A curable composition and a cured product were produced and then physical properties thereof were evaluated in the same way as in Example 1 except that instead of the methacrylic monomer having a phosphate group in Example 1, 10 parts of an acrylic monomer having both of an alicyclic structure and a carboxyl group (HOA-HH (2-acryloyloxyethyl hexahydrophthalate) were added.

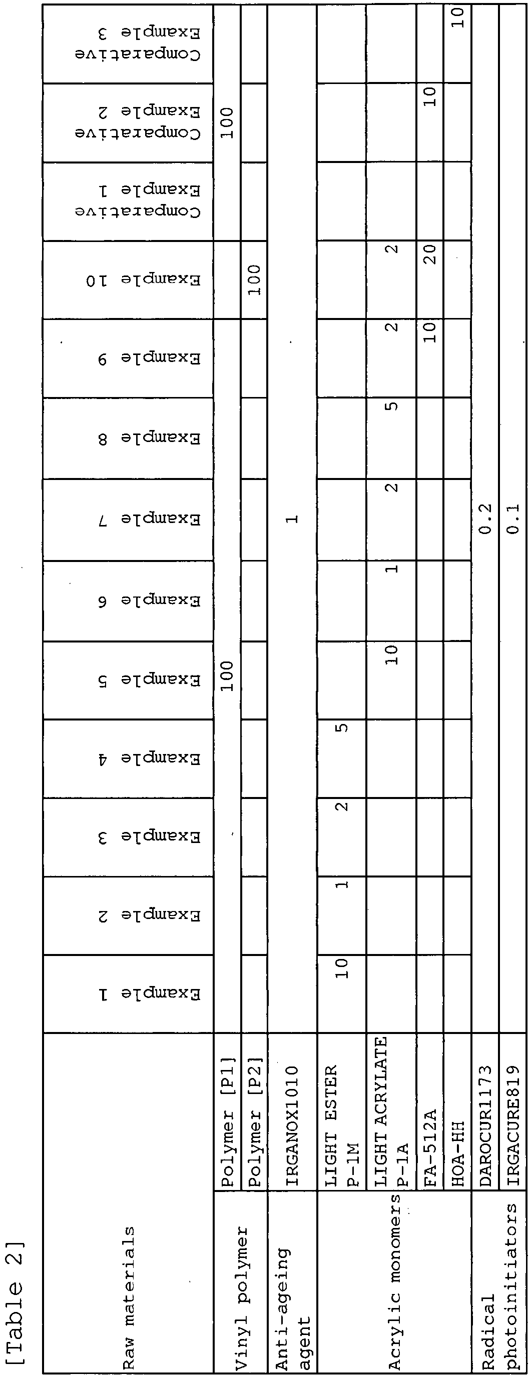

### Cured product producing method:

The predetermined amount of the IRGANOX 1010 was melted and incorporated into either one of the vinyl polymers at 150°C, and then cooled to 50°C. The predetermined amount of one or more of the acrylic monomers and that of the radical photoinitiators were sufficiently mixed with the cooled mixture. Thereafter, the resultant was allowed to stand still at 50°C for 1 day to be degassed.

### Curing conditions:

(1) Sheet sample: Each of the curable compositions was cast into a mold frame having a size of 100 x 140 x 2 (thickness) mm at 50°C, and the composition was sufficiently leveled. The composition was then passed through the UV radiating device once at an energy of 184 W/cm, and a conveyer speed of 1 m/minute to produce the cured product (totalized light quantity = 3030 mJ/cm²).
(2) The curable composition was applied into the form of beads each having a weight of 1 to 2 g and a diameter of about 1 cm onto each of the substrates. The resultant was cured under the same conditions as describe above.

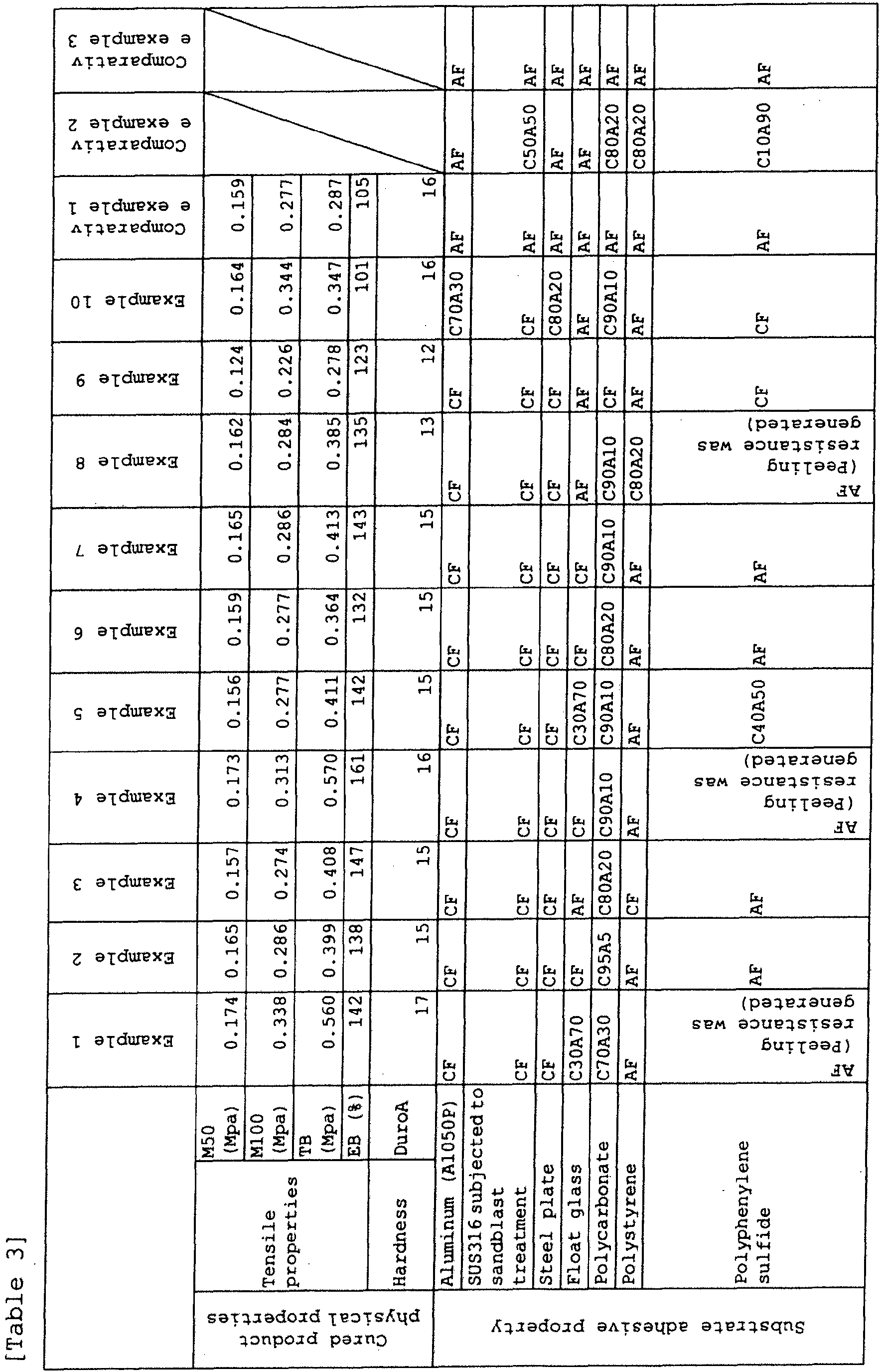

Tensile properties: M50 (the strength when each of the samples was elongated into 50%), M100 (that when the sample was elongated into 100%), TB (the strength when the sample was broken), and EB (the elongation when the sample was broken). These were measured in accordance with JIS K 6251.
Duro A: Rubber hardness (it was measured in accordance with JIS K 6253.)

From the comparison of Examples 1 to 8 with the comparative example 1, it can be understood that the addition of the methacrylic monomer having a phosphate group as a component (b) produces a remarkable improvement in an adhesive property onto a metallic substrate such as aluminum, a steel plate, or stainless steel. About other substrates, the level of the improvement is slightly varied; however, the adhesive property onto glass or polycarbonate is also improved. When the Examples are compared with Comparative Example 2, wherein the alicyclic monomer generally said to produce an advantageous effect onto the adhesive property is added, and Comparative Example 3, wherein the monomer having both of the alicyclic structure and the carboxyl group is added, it is evident that the adhesive property is remarkably improved according to the present invention. In Example 9, wherein the vinyl monomer having a cyclic structure as the component (c) is used together with the methacrylic monomer (b) having a phosphate group, a remarkable improvement is made in the adhesive property onto polyphenylene sulfide, which is a substrate widely-usable for electrical and electronic articles, as well as in that onto the metal substrate. From the results, it can be understood that about cured products wherein a vinyl polymer (a) is used, a dramatic improvement is made by a combination of the vinyl polymer with a methacrylic monomer having a phosphate group, out of monomers said in general to produce an improvement in the adhesive property, or with a vinyl monomer having a cyclic structure besides the same vinyl monomer.

### INDUSTRIAL APPLICABILITY

In the curable composition of the present invention, a vinyl monomer having a phosphate group is added to a vinyl polymer, or a vinyl monomer having a cyclic structure in addition to the monomer is added thereto. When the composition is cured, the vinyl polymer cured product can be improved in adhesive property onto a substrate. Thus, the composition is suitable for a sealant, an electrical/electronic component material, an electrical insulating member, an adhesive agent, a tackifier, a potting agent, a heat radiating member, a waterproof member, a vibration-proof/vibrating controlling/vibration-free member, a film, a marine deck caulking, a casting material, a molding material or some other article that is required to have a substrate adhesive property.

## Claims

1. A curable composition comprising:
(a) a vinyl polymer having, in any single molecule thereof, at least one group represented by the following general formula (1) at a molecular terminal thereof:
-OC(O)C(R)=CH₂ (1)
wherein R represents hydrogen or an organic group having 1 to 20 carbon atoms; and
(b) a vinyl monomer having a phosphate group
**characterized in that**
said vinyl monomer includes at least one selected from
2-(meth)acryloyloxyethyl phosphate, 2-(meth)acryloyloxypropyl phosphate,
2-(meth)acryloyloxy-3-chloropropyl phosphate, and 2-(meth)acryloyloxyethylphenyl phosphate and
the main chain of said vinyl polymer is produced by polymerizing a (meth)acrylic ester.

2. The curable composition according to claim 1, further comprising:
(c) a vinyl monomer having a cyclic structure.

3. The curable composition according to claim 1, wherein the vinyl monomer (c) is a (meth)acrylic acid monomer.

4. The curable composition according to any one of claims 1 to 3, wherein the ratio of the weight-average molecular weight (Mw) of the vinyl monomer (a) to the number-average molecular weight thereof (Mn), Mw/Mn, is less than 1.8.

5. The curable composition according to any one of claims 1 to 4, wherein the main chain of the vinyl polymer (a) is produced by living radical polymerization.

6. The curable composition according to claim 5, wherein the living radical polymerization is atom transfer radical polymerization.

7. The curable composition according to claim 1, wherein the main chain of the vinyl polymer (a) is produced by polymerizing mainly an acrylic ester.

8. The curable composition according to any one of claims 1 to 7, further comprising (d) an initiator.

9. The curable composition according to claim 8, wherein the initiator (d) is at least one selected from the group consisting of a thermopolymerization initiator, a photopolymerization initiator, and a redox initiator.

10. A cured product obtained by curing the curable composition according to any one of claims 1 to 9.

11. The cured product according to claim 10, which is obtained by curing the composition by heating and/or an active energy beam.

12. The cured product according to claim 11, wherein the active energy beam is UV rays and/or an electron beam.

13. The curable composition according to any one of claims 1 to 9, which is used for a sealant, an electrical/electronic component material, an electrically insulating member, an adhesive agent, a tackifier, a potting agent, a heat radiating member, a vibration-proof/vibrating controlling/vibration-free member, a film, or a casting material.

## Patentansprüche

1. Härtbare Zusammensetzung, umfassend:
(a) ein Vinylpolymer, das in jedem einzigen Molekül davon an einem molekularen Ende davon wenigstens eine Gruppe aufweist, die durch die folgende allgemeine Formel (1) dargestellt wird:
-OC(O)C(R)=CH₂ (1)
wobei R Wasserstoff oder eine organische Gruppe mit 1 bis 20 Kohlenstoffatomen darstellt, und
(b) ein Vinylmonomer mit einer Phosphatgruppe,
**dadurch gekennzeichnet, dass**
das Vinylmonomer wenigstens eines umfasst, das aus
2-(Meth)acryloyloxyethylphosphat, 2-(Meth)acryloyloxypropylphosphat,
2-(Meth)acryloyloxy-3-chlorpropylphosphat und
2-(Meth)acryloyloxyethylphenylphosphat
ausgewählt ist, und
die Hauptkette des Vinylpolymers durch Polymerisieren eines (Meth)acrylesters hergestellt wird.

2. Härtbare Zusammensetzung nach Anspruch 1, ferner umfassend:
(c) ein Vinylmonomer mit einer Ringstruktur.

3. Härtbare Zusammensetzung nach Anspruch 1, wobei das Vinylmonomer (c) ein (Meth)acrylsäuremonomer ist.

4. Härtbare Zusammensetzung nach einem der Ansprüche 1 bis 3, wobei das Verhältnis des Gewichtsmittels des Molekuargewichts (Mw) des Vinylmonomers (a) zum Zahlenmittel des Molekulargewichts davon (Mn), Mw/Mn, kleiner 1,8 ist.

5. Härtbare Zusammensetzung nach einem der Ansprüche 1 bis 4, wobei die Hauptkette des Vinylpolymers (a) durch lebende Radikalpolymerisation hergestellt ist.

6. Härtbare Zusammensetzung nach Anspruch 5, wobei die lebende Radikalpolymerisation Atomtransferradikalpolymerisation ist.

7. Härtbare Zusammensetzung nach Anspruch 1, wobei die Hauptkette des Vinylpolymers (a) durch Polymerisieren hauptsächlich eines Acrylesters hergestellt ist.

8. Härtbare Zusammensetzung nach einem der Ansprüche 1 bis 7, ferner umfassend (d) einen Initiator.

9. Härtbare Zusammensetzung nach Anspruch 8, wobei der Initiator (d) wenigstens einer ist, der aus der aus einem Thermopolymerisationsinitiator, einem Photopolymerisationsinitiator und einem Redoxinitiator bestehenden Gruppe ausgewählt ist.

10. Gehärtetes Produkt, das durch Aushärten der härtbaren Zusammensetzung nach einem der Ansprüche 1 bis 9 erhältlich ist.

11. Gehärtetes Produkt nach Anspruch 10, welches durch Aushärten der Zusammensetzung durch Hitze und/oder einer aktiven Energiestrahlung erhalten ist.

12. Gehärtetes Produkt nach Anspruch 11, wobei die aktive Energiestrahlung UV-Strahlung und/oder ein Elektronenstrahl ist.

13. Härtbare Zusammensetzung nach einem der Ansprüche 1 bis 9, die als eine Dichtung, ein elektrisches/elektronisches Komponentenmaterial, ein elektrisches Isolationselement, ein Adhäsivmittel, einen Klebrigmacher, eine Vergussmasse, ein Hitzestrahlungselement, ein vibrationsbeständiges/ vibrationssteuerndes/ vibrationsfreies Element, eine Folie oder ein Gießmaterial verwendet wird.

## Revendications

1. Composition durcissable comprenant :
(a) un polymère vinylique présentant, dans toute molécule individuelle de celui-ci, au moins un groupe représenté par la formule (1) générale suivante à une terminaison moléculaire de celui-ci :
-OC(O)C(R)=CH₂ (1)
où R représente l'hydrogène ou un groupe organique ayant de 1 à 20 atomes de carbone ; et
(b) un monomère vinylique ayant un groupe phosphate
**caractérisée en ce que**
ledit monomère vinylique comprend au moins un choisi parmi le phosphate de 2-(méth)acryloyloxyéthyle, le phosphate de 2-(méth)acryl-oyloxypropyle, le phosphate de 2-(méth)acryloyloxy-3-chloropropyle, et le phosphate de 2-(méth)acryloyloxyéthylphényle et
la chaîne principale dudit polymère vinylique est produite par polymérisation d'un ester (méth)acrylique.

2. Composition durcissable selon la revendication 1, comprenant de plus :
(c) un monomère vinylique ayant une structure cyclique.

3. Composition durcissable selon la revendication 1, dans laquelle le monomère vinylique (c) est un monomère d'acide (méth)acrylique.

4. Composition durcissable selon l'une quelconque des revendications 1 à 3, dans laquelle le rapport de la masse moléculaire moyenne en masse (Mw) du monomère vinylique (a) à la masse moléculaire moyenne en nombre de celui-ci (Mn), Mw/Mn, est inférieur à 1,8.

5. Composition durcissable selon l'une quelconque des revendications 1 à 4, dans laquelle la chaîne principale du polymère vinylique (a) est produite par polymérisation radicalaire vivante.

6. Composition durcissable selon la revendication 5, dans laquelle la polymérisation radicalaire vivante est une polymérisation radicalaire par transfert d'atome.

7. Composition durcissable selon la revendication 1, dans laquelle la chaîne principale du polymère vinylique (a) est produite par polymérisation principalement d'un ester acrylique.

8. Composition durcissable selon l'une quelconque des revendications 1 à 7, comprenant de plus (d) un initiateur.

9. Composition durcissable selon la revendication 8, dans laquelle l'initiateur (d) est au moins un choisi dans le groupe constitué d'un initiateur de thermopolymérisation, d'un initiateur de photopolyméri-sation, et d'un initiateur redox.

10. Produit durci obtenu par durcissement de la composition durcissable selon l'une quelconque des revendications 1 à 9.

11. Produit durci obtenu selon la revendication 10, lequel est obtenu par durcissement de la composition par chauffage et/ou un faisceau d'énergie active.

12. Produit durci selon la revendication 11, dans lequel le faisceau d'énergie active est des rayons UV et/ou un faisceau d'électrons.

13. Composition durcissable selon l'une quelconque des revendications 1 à 9, laquelle est utilisée pour un agent de scellement, un matériau de constituant électrique/électronique, un élément électriquement isolant, un agent adhésif, un agent collant, un agent d'empotage, un élément de rayonnement thermique, un élément résistant aux vibrations/contrôlant les vibrations/exempt de vibrations, un film, ou un matériau de coulée.
